(19) Europäisches Patentamt
European Patent Office
Office européen des brevets

(11) Publication number: **0 074 707**
**A2**

(12) **EUROPEAN PATENT APPLICATION**

(21) Application number: 82303881.5

(22) Date of filing: 22.07.82

(51) Int. Cl.³: C 07 C 87/22
C 07 C 87/20, C 07 C 93/02
C 07 C 87/38, C 07 C 87/28
C 07 C 87/50, C 07 C 87/36
C 07 C 147/12, C 08 G 59/50

(30) Priority: 16.09.81 US 302931

(43) Date of publication of application: 23.03.83 Bulletin 83/12

(84) Designated Contracting States: AT BE CH DE FR GB IT LI LU NL SE

(71) Applicant: MILLIKEN RESEARCH CORPORATION
P.O. Box 1927
Spartanburg South Carolina 29304(US)

(72) Inventor: Kluger, Edward William
Route 1
Pauline South Carolina 29374(US)

(72) Inventor: Iyer, Venketa Subramanian
320 South Park Drive
Spartanburg South Carolina 29302(US)

(74) Representative: Perry, Robert Edward et al,
GILL JENNINGS & EVERY 53-64 Chancery Lane
London WC2A 1HN(GB)

(54) **Polyamines and their use as curing agents.**

(57) A polyamine of the formula

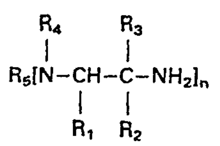

wherein $R_1$ is H or $C_{1-12}$ alkyl;

$R_2$ and $R_3$ are independently selected from H and $C_{1-8}$ alkyl;

$R_4$ is H or

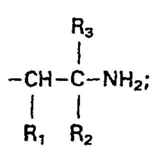

$R_5$ is a radical having a valency of *n* and which is the radical of a $C_{5-30}$ alkane, a $C_{12-30}$ aromatic compound or $C_{5-60}$ cycloalkane or is derived from an amine-terminated polyglycol having a molecular weight of from 100 to 6,000 and from 2 to 100 ether linkages; and

*n* is an integer of from 2 to 15.

These compounds can be used as curing agents for epoxy resins. They can be prepared by reduction of novel nitro analogues, themselves prepared from a nitroalkane, an aldehyde and a polyamine.

EP 0 074 707 A2

POLYAMINES AND THEIR USE AS CURING AGENTS

The present invention relates to polyamines, to epoxy resin compositions containing them, and to their use in curing epoxy resins.

Epoxy resins are widely used. They may be broadly defined as resinous intermediate materials which are characterised by the presence of an epoxy group. Epoxy resins have gained wide acceptance in structural applications and in protective coatings, because of their generally excellent toughness, adhesion, chemical resistance, and electrical properties. The combination of these properties is generally not found in any other single plastics material.

In general, epoxy resins are not used alone. A curing agent or hardener is usually added, to give a thermoset material.

Many curing agents or hardeners for epoxy resins are known. Agents are available for curing at room temperature or upon heating. Curing may take place, in general, either by a coupling or addition process, or by catalytic polymerisation. Epoxy and/or hydroxyl groups in the resin may be involved.

The known curing agents or hardeners for epoxy resins fall into three categories: (1) the acidic type, e.g., acid anhydrides; (2) aldehyde condensation products, e.g., phenol-urea and melamine-formaldehyde resins; and (3) the amine type, e.g., aliphatic and aromatic amines, polyamides, tertiary amines and amine adducts.

A polyamine of the present invention has the formula

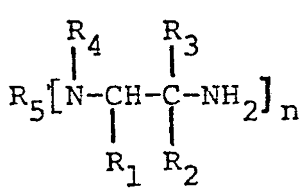

wherein $R_1$ is H or $C_{1-10}$ alkyl;

$R_2$ and $R_3$ are independently selected from H and $C_{1-6}$ alkyl;

$R_4$ is H or

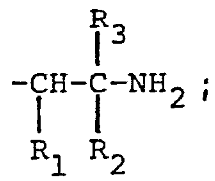

$R_5$ is a radical having a valency of n and which is the radical of an alkyl group containing from 6 to 25 carbon atoms; an aromatic group containing from 13 to 25 carbon atoms; a cycloalkyl group having from 6 to 50 carbon atoms; and an amine-terminated polyglycol moiety having a molecular weight of from 150 to 5,000 and from 2 to 80 ether linkages; and n is an integer of from 2 to 12.

A composition of the present invention preferably comprises 100 parts by weight of epoxy resin and from 15 to 50, preferably 20 to 30, parts by weight of a polyamine of the invention. On curing, such compositions can have good flexibility, high heat distortion temperatures, and excellent solvent-resistance.

The compounds of the present invention may be conveniently prepared in a two-step process. In a first step, an intermediate poly(2-nitroalkyl)polyamine is prepared by condensing a nitroalkane with an aldehyde such as formaldehyde and a suitable polyamine, according to the following reaction scheme:

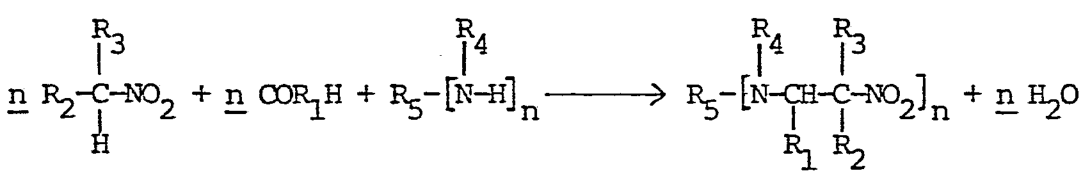

wherein $R_1$, $R_2$, $R_3$, $R_4$, $R_5$ and n are as defined above.

In the nitroalkane, $R_3$ is preferably $CH_3$. Examples of commonly-available, useful nitroalkanes are nitromethane, nitroethane, 1-nitropropane and 2-nitropropane. High-order

nitroparaffins, containing up to about 10 carbon atoms, may also be used. Particularly good results may be obtained using 2-nitropropane (which is preferred).

The polyamines employed as a starting material may be any of a wide range of compounds. A preferred class of such compounds comprises amine-terminated polyglycol compounds, e.g., cyanoethylated and reduced compounds, e.g. having from 2 to 8, preferably from 2 to 6, hydroxyl groups, and a molecular weight of from about 150 to about 5,000. Preferred examples of such compounds include the following:

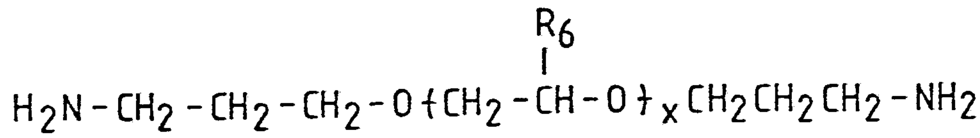

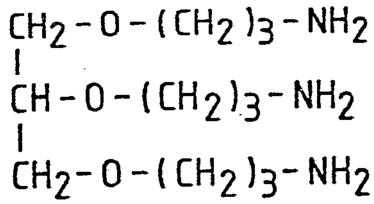

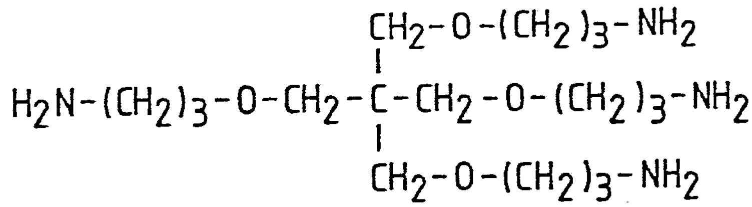

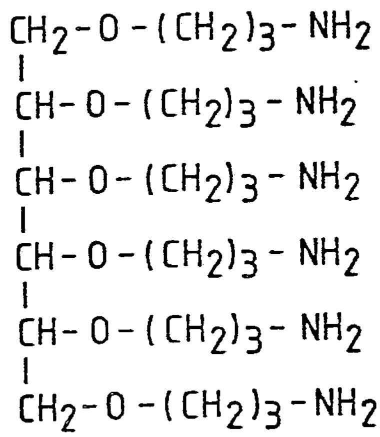

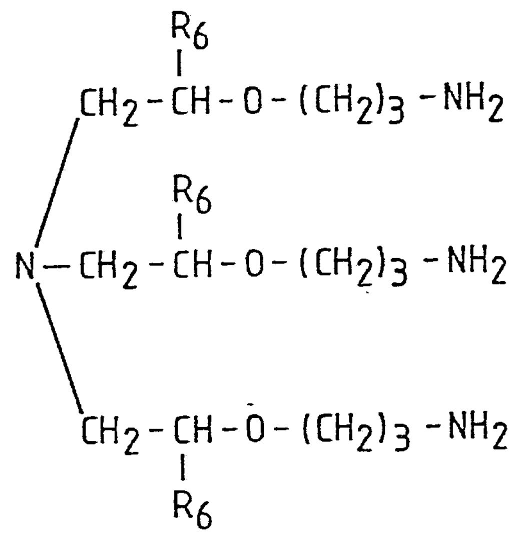

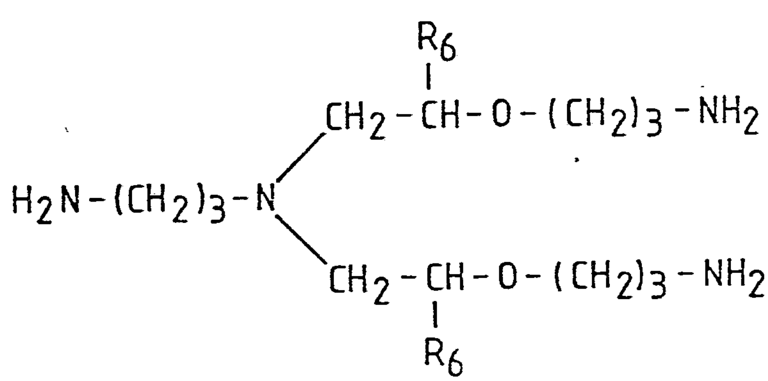

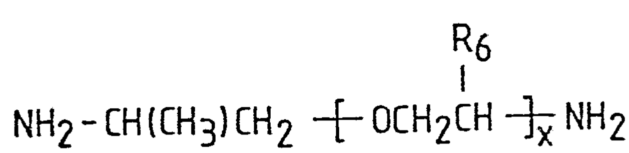

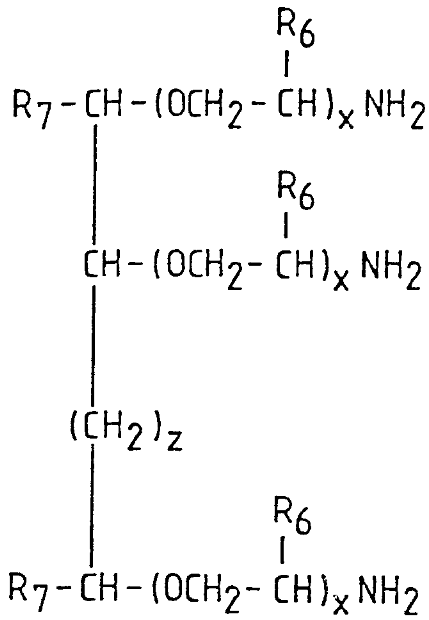

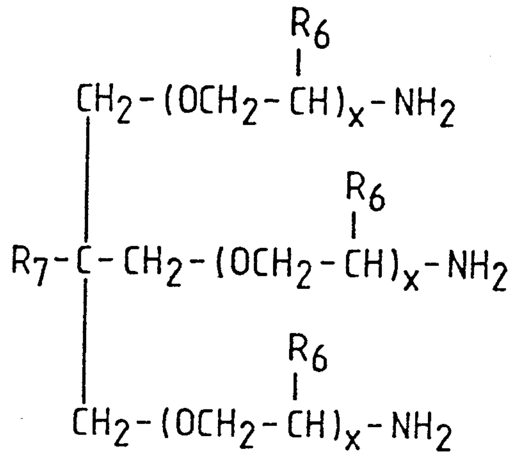

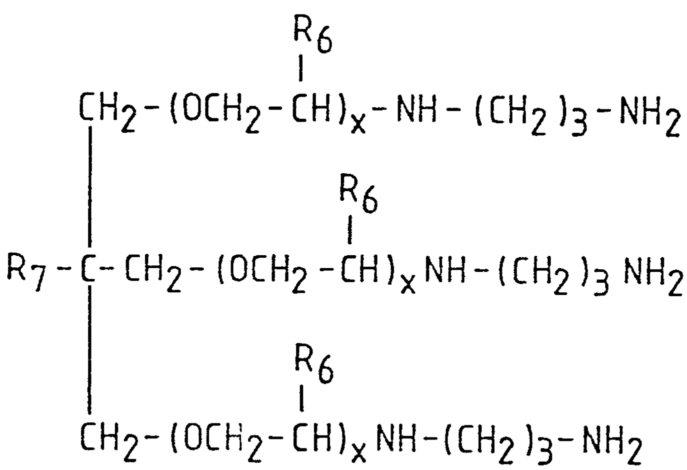

in which $\underline{x}$ is an integer of from 1 to 80; $\underline{z}$ is zero or an integer of from 1 to 10; $R_6$ is H or $CH_3$; and $R_7$ is H or $C_{1-6}$ alkyl.

Another preferred class of cyanoethylated and reduced polyglycols are disclosed in U.S. Patent Specification No. 4,178,427. Such compounds have the formula

$$\begin{array}{c} \qquad\qquad\qquad [BXBR[BX]_g BR[ANH_2]_f]_h \\ \qquad\qquad\qquad | \\ [H_2NA]_c R[BX]_d [BRBX]_y BR[ANH_2]_e \end{array}$$

wherein A is polyoxyalkylene radical containing from 1 to about 17 $C_{2-4}$ oxyalkylene groups; B is a polyoxyalkylene amino radical containing from 1 to 17 $C_{2-4}$ oxyalkylene groups; R is a $C_{2-5}$ hydrocarbon radical forming from 2 to 4 oxycarbon linkages with A and B; X is a C=O radical, a C=S radical or a radical derived from a difunctional isocyanate having two -NHCO- groups; $\underline{c}$, $\underline{d}$, $\underline{e}$, $\underline{f}$, and $\underline{g}$ are each 1, 2 or 3, but $\underline{c} + \underline{d} \leqslant 4$; $\underline{y}$ is a number from 0 to about 5; and $\underline{h}$ is 0, 1 or 2.

Alkylenepolyamines can be used, which preferably have from 6 to 25 carbon atoms. $\underline{n}$ is preferably from 3 to 13. A particularly useful polyamine of this type has the formula

$$\begin{array}{c} H_2N-(CH_2)_j-CH-(CH_2)_k-NH_2 \\ | \\ CH_2NH_2 \end{array}$$

wherein $\underline{j}$ and $\underline{k}$ are the same or different integers of from 1 to 6, preferably 2 to 5. Most preferably $\underline{j}$ is 3 and $\underline{k}$ is 4.

$C_{13-25}$ aromatic polyamines or $C_{6-50}$ cycloalkylenepolyamines can also be used. Examples are:

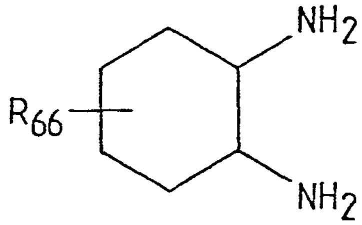

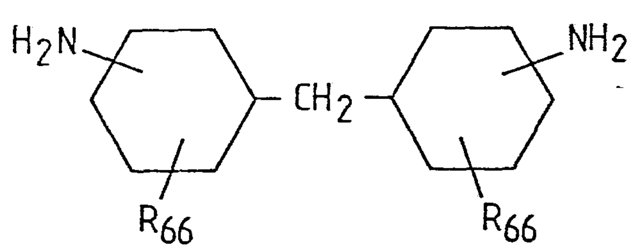

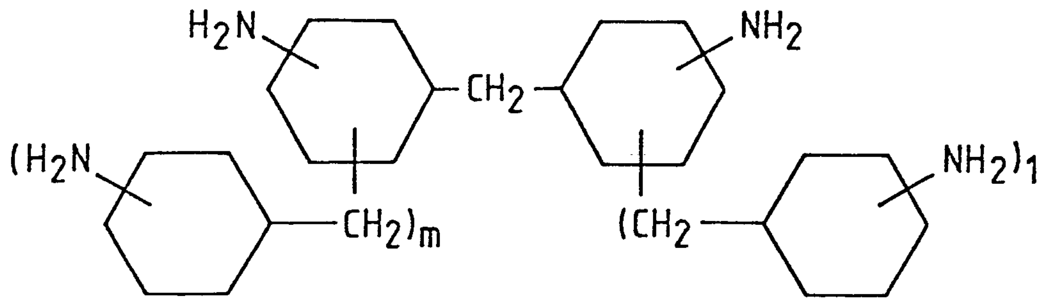

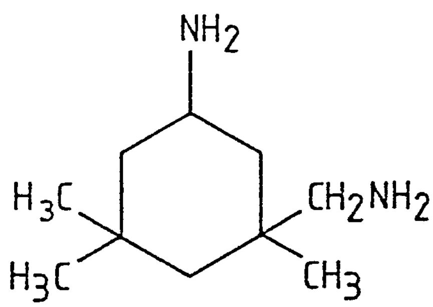

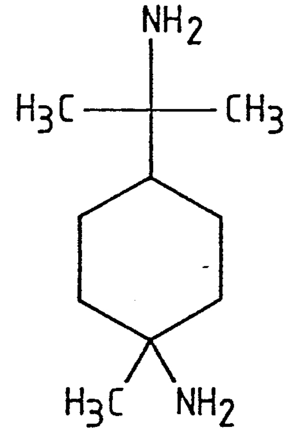

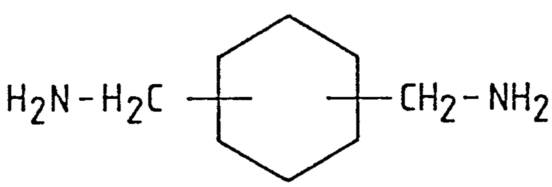

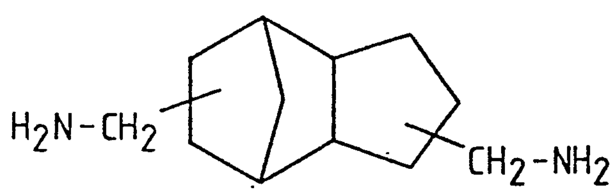

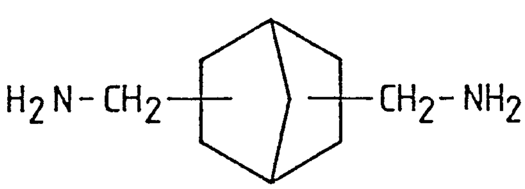

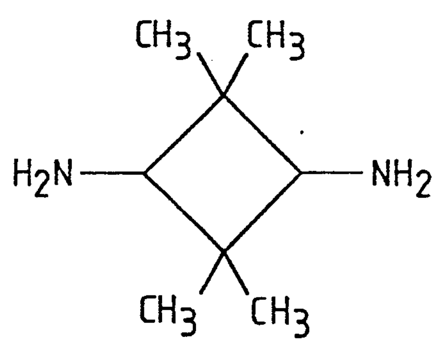

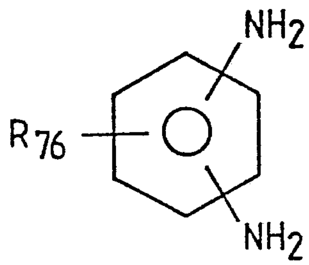

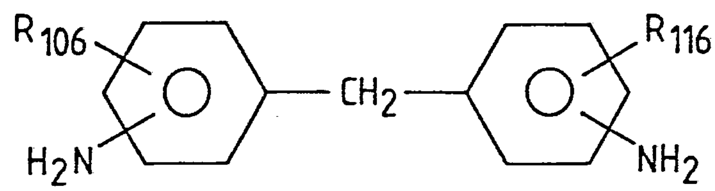

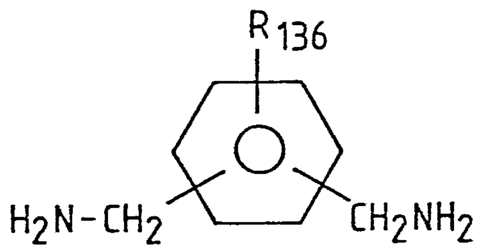

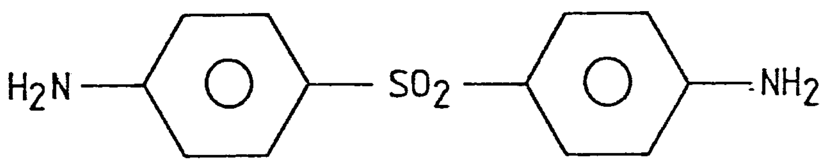

; and

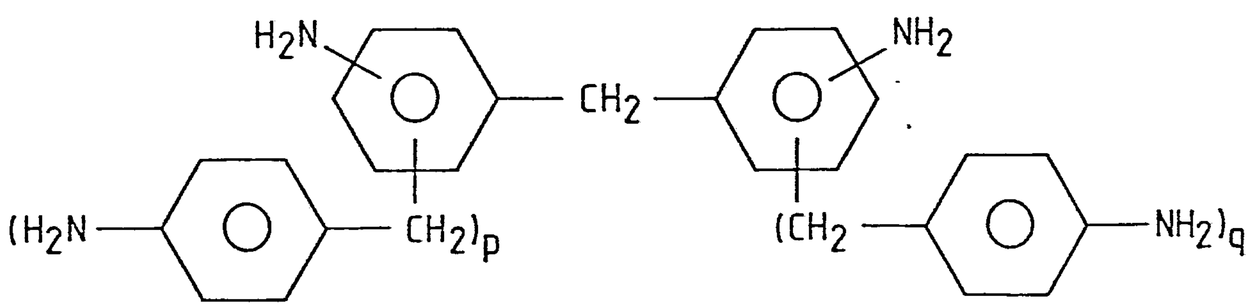

wherein $R_{66}$ is H or $C_{1-4}$ alkyl; <u>l</u> + <u>m</u> is 0 to 3; $R_{76}$ is H, $C_{1-5}$ alkyl, $C_{1-20}$ alkoxy, Cl, Br, $NO_2$, $C_{1-20}$ alkylsulfonyl or $C_{1-20}$ arylsulfonyl; $R_{106}$ and $R_{116}$ are each H, $C_{1-5}$ alkyl, $C_{1-20}$ alkoxy, Cl or Br; $R_{136}$ is H or $C_{1-5}$ alkyl;

and $\underline{p} + \underline{q}$ is from 0 to 3.

Alternatively, the poly(2-nitroalkyl)polyamine may be prepared in a two-step process by first reacting the aldehyde with the nitroalkane and then reacting the corresponding nitroalcohol with the polyamine in a separate reaction, according to the following sequence:

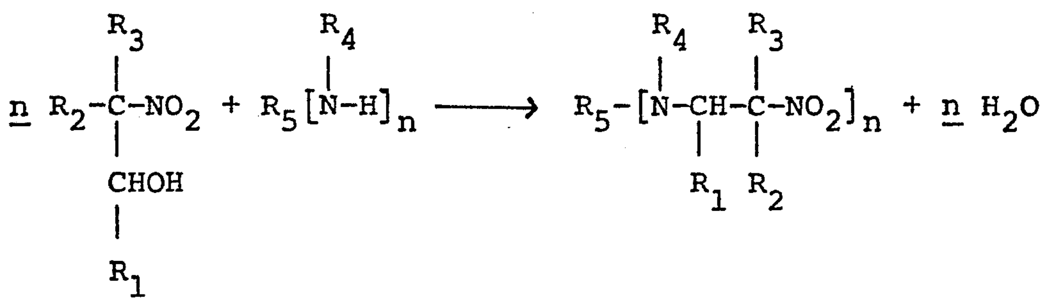

wherein $R_1$, $R_2$, $R_3$, $R_4$, $R_5$ and n are as defined above.

The reaction of nitroalkane, formaldehyde and polyamine may be carried out at a temperature of from 20°C to the boiling point of the mixture. The preferred temperature is from 75 to 120°C. The use of a solvent is not critical, but the use of a mutual solvent provides a homogeneity for all the reactants and facilitates mixing. Lower alcohols, such as methyl alcohol, ethyl alcohol or isopropyl alcohol, are preferred.

Stoichiometric amounts of nitroalkane, e.g., 2-nitropropane, aldehyde and polyamine may be used. Excess aldehyde and polyamine may be used without adverse effects. Preferably, an approximately equivalent number of moles of nitroalkane and aldehyde are used, which is equal to the number of primary amino nitrogens in the polyamine.

The crude poly(2-nitroalkyl)polyamine may then be isolated by any convenient means such as, for instance, solvent extraction. It may then be reduced to the desired poly(2-aminoalkyl)polyamine compound with hydrogen and a suitable metal catalyst. For example, hydrogen is passed through a catalyst-containing solution of poly(2-nitroalkyl)-polyamine in a suitable solvent. Examples of solvents are

lower alcohols such as methyl alcohol, ethyl alcohol and isopropyl alcohol, optionally in admixture with water; ethers such as dioxane; and hydrocarbons such as benzene, toluene, xylenes, cyclohexane and petroleum ether. For example, equal parts by weight of ethyl alcohol and water may be used. The amount of solvent is not critical. The preferred solvent is methyl alcohol, in an amount of 30 to 80% by weight.

Any suitable reduction catalyst may be used. Examples of catalysts are Raney nickel, nickel oxides and finely divided metals such as iron, cobalt, platinum, ruthenium, osmium and rhodium. Further, metal catalysts supported on pumice, asbestos, kieselguhr, alumina, silica gel or charcoal can work well. The amount of catalyst used depends on such reaction variables as temperature, pressure and time, and it can vary from 0.025 to 15% by weight of the poly(2-nitroalkyl)polyamine. The preferred catalyst is Raney nickel or supported nickel, present in an amount of from 0.1 to 15% by weight of the poly(2-nitroalkyl)polyamine.

The poly(2-nitroalkyl)polyamine may be reduced at a temperature of from 20 to 120°C; temperatures of from 40 to 75 may be preferred since they can provide fast reaction times and high yields of product. During the reduction, pressures ranging from 100 to 3,000, preferably from 500 to 1,500, psi of hydrogen may be used.

The process of reducing the poly(2-nitroalkyl)polyamine can be a batch operation carried out in a highpressure stirred autoclave; however, other procedures may give equally good results. A continuous flow reactor may be used,with a suspended- or fixed-bed solid catalyst, operating at appropriate conditions of temperature, pressure and flow-rate, to give the desired reduction. Most preferably, the reduction is accomplished by incremental addition of the poly(2-nitroalkyl)polyamine to a batch-type reactor under the given operating conditions.

Substantially pure, low molecular weight polyamines can be separated from the reaction mixture by filtration of the catalyst and insoluble material, distilling off the solvent and thereafter distilling the residue under reduced pressure. Where higher molecular weight polyamines are prepared and where mixtures of non-stoichiometric reaction ratios are used, the resulting products may be more difficult to purify. These products may generally be used as such, without any adverse effects.

One particularly important use for the novel compounds of the present invention is as curing agents for polyepoxides. Compounds containing at least two epoxy, preferably terminal epoxy, groups, can be cured at elevated temperatures using the novel amine compounds. Such polyepoxides may be saturated or unsaturated, aliphatic, cycloaliphatic, aromatic or heterocyclic, and may be substituted by, for example, hydroxyl groups or ether radicals. The polyepoxides can be monomeric or polymeric. Such polyepoxides, and their preparation, are well known in the art.

The curing of polyexpoxides with the polyamine curing agents of the present invention may be accomplished by simply mixing the two components together. While the reaction between the two components may occur slowly at room temperature, improved results can be obtained if the mixture is heated to from 50 to 180°C for from 1 to 12 hours, and thereafter post-curing the reaction product for an additional period of from 1 to 8 hours at from 140 to 225°C. With a small casting, curing of the reaction mixture can be obtained by heating the reaction mixture for about 2 hours at from 80 to 100°C and thereafter post-curing the reaction product at from 140 to 225°C for an additional 2 hours or so.

It is generally desirable that the polyepoxide should be in a mobile condition when the curing agent is added, to facilitate uniform mixing. If the polyepoxide is extremely viscous or solid at room or casting temperature, the polyepoxide may be heated to reduce the viscosity, or

a volatile liquid solvent which can escape from the polyepoxide composition containing the novel polyamine curing agent by evaporation before and/or during the curing can be added to the polyepoxide to reduce its viscosity. Examples of such volatile liquid solvents are ketones such as acetone and methyl ethyl ketone; ethers such as ethyl acetate and butyl acetate; ether alcohols such as methyl, ethyl or butyl ethers of ethylene glycol; and chlorinated hydrocarbons such as chloroform.

In addition to the use of the polyamine compounds of the present invention as epoxy curing agents, many other uses can readily be envisaged by those skilled in the art, e.g. as oil and fuel adductive intermediates, for the formation of diisocyanate compositions for incorporation into polyurethane compositions, and, after further reaction, in the formation of novel and potentially useful polyamides.

The following Examples 1 to 4, 8 to 10 and 14 to 17 illustrate the preparation of the novel intermediates, and 5 to 7, 11 to 13 and 18 to 20 the product, of the present invention. Test Examples, illustrating use, then follow. Unless otherwise indicated, all parts and/or percentages are by weight.

Example 1

In a 1,000 cc three-necked flask equipped with a magnetic stir bar, thermometer, dropping funnel, reflux condenser with a Dean-Stark collector, and heating mantle were placed 115.3 gm (0.97 mole) of 2-nitro-2-methyl-1-propanol, 150 ml of toluene, 10 cc of 2-nitropropane, and 167.8 g (0.97 mole) of 4-aminomethyl-1,8-octanediamine. This mixture was then heated to reflux and 17.5 ml of water distilled over in the Dean-Stark trap during the course of several hours. The reaction mixture was allowed to reflux until no water distilled over, indicating that reaction was complete. On cooling, the toluene and

unreacted starting materials were then distilled away from the product under vacuum (15-20 mm Hg) to give a viscous pale orange product. A yield of 268.2 g, or 100% of the crude poly-(-2-nitro-2-methylpropyl)-4-aminomethyl-1,8-octanediamine was obtained. An IR spectrum of the product indicated that nitro groups were present. The product was used without further purification.

EXAMPLE 2

In a 1,000 cc three-necked flask equipped with a magnetic stir bar, thermometer, dropping funnel, reflux condenser with a Dean-Stark collector, and heating mantle were placed 238.8 (2 moles) of 2-nitro-2-methyl-1-propanol, 250 ml of toluene, 20 cc of 2-nitropropane, and 173.3 g (1.0 mole) of 4-aminomethyl-1,8-octanediamine. This mixture was then heated to reflux and 38 ml of water distilled over in the Dean-Stark trap during the course of three hours. The reaction mixture was allowed to reflux until no water distilled over, indicating that the reaction was complete. On cooling, the toluene and unreacted starting materials were then distilled away from the product under vacuum (15-20 mg) to give a viscous pale orange product. A yield of 378.6 gm, or 100% of the poly-(-2-nitro-2-methylpropyl)-4-aminomethyl-1,4-octanediamine, was obtained. An IR spectrum of product indicated that nitro groups were present. The product was used without further purification.

EXAMPLE 3

In a 2,000 cc three-necked flask equipped with a magnetic stir bar, thermometer, Dean-Stark trap collector, and heating mantle were placed 357.3 g (3 moles) of 2-nitro-2-methyl-1-propanol, 250 ml of toluene, 20 cc of 2-nitropropane, and 173.3 g (1 mole) of 4-aminomethyl-1,8-octanediamine. This mixture was then heated to reflux and 54 ml of water distilled over in the Dean-Stark trap during the course of several hours. The reaction mixture was allowed to reflux with no water distilling over, indicating that the reaction was complete. On cooling, the toluene and unreacted starting materials were then distilled away from the product under vacuum (15-20 mm Hg) to give a viscous pale orange product. A yield of 500.1 gm, or 100% of the crude poly-(-2-nitro-2-methylpropyl)-4-aminomethyl-1,8-octanediamine, was obtained. An IR spectrum of the product indicated that nitro groups were present. The product was used without any further purification.

EXAMPLE 4

In a 2,000 cc three-necked flask equipped with a mechanical stirrer, thermometer, Dean-Stark trap collector, and heating mantle were placed 714 gm (6 moles) of 2-nitro-2-methyl-1-propanol, 1,000 cc of toluene, and 173.3 g (1 mole) of 4-aminomethyl-1,8-octanediamine. This mixture was then heated to reflux and 104 ml of water distilled over in the Dean-Stark trap during the course of several hours. The reaction mixture was allowed to reflux until no water distilled over, indicating that the reaction was complete. On cooling, the toluene and

unreacted starting materials were then distilled away from the product under vacuum (15-20 mm Hg) to give a dark brown very viscous product. A yield of 714.4 gm, or 91.7%, of the crude poly-(-2-nitro-2-methylpropyl)-4-aminomethyl-1,8-octanediamine was obtained. An IR spectrum of the product indicated that nitro groups were present. The product was used without further purification.

EXAMPLE 5

In a 2,000 cc stirred autoclave were charged 148 gm of crude poly-(-2-nitro-2-methylpropyl)polyamine from Example 2, 200 cc of methyl alcohol, and 7.0 gm of Raney nickel catalyst. The autoclave was sealed and pressured with hydrogen gas. The reduction of the poly-(-2-nitro-2-methylpropyl)polyamine was conducted at 40-100°C and 1,000-1,600 psi hydrogen pressure until the hydrogen absorption was complete. On cooling, the reaction mixture was filtered from the catalyst and the methyl alcohol and any volatiles were removed under vacuum to give a pale yellow liquid product. An IR spectrum of the product indicated that all the nitro groups had been reduced. The crude product was further fractioned at 5.5 mm Hg (200-230°C) to give colorless liquids of varying 2-amino-2-methylpropyl substitution, with the major components being the di- and trisubstituted products.

EXAMPLE 6

In a 2,000 cc stirred autoclave were charged 150 gm of crude poly-(-2-nitro-2-methylpropyl)polyamine from Example 3,

200 cc of methyl alcohol, and 7.0 gm of Raney nickel catalyst. The autoclave was sealed and pressured with hydrogen gas. The reduction of the poly-(-2-nitro-2-methylpropyl)polyamine was conducted at 40-100°C and 1,000-1,600 psi hydrogen pressure until the hydrogen absorption was complete. On cooling, the reaction mixture was filtered from the catalyst and the methyl alcohol and any volatiles were removed under vacuum to give a pale yellow liquid product. An IR spectrum of the product indicated that all the nitro groups had been reduced. The crude product was further fractionated at 160-200°C and 5.0-5.5 mm Hg to give colorless liquids of varying 2-amino-2-methylpropyl substitution, with the major component being the trisubstituted product.

EXAMPLE 7

In a 2,000 cc stirred autoclave were charged 150 gm of crude poly-(-2-nitro-2-methylpropyl)polyamine of Example 1, 200 cc of methyl alcohol, and 7.0 gm of Raney nickel catalyst. The autoclave was sealed and pressured with hydrogen gas. The reduction of the poly-(-2-nitro-2-methylpropyl)polyamine was conducted at 40-100°C and 900-1,500 psi of hydrogen pressure until the hydrogen absorption was complete. On cooling, the reaction mixture was filtered from the catalyst and the methyl alcohol and any volatiles were removed under vacuum to give a colorless liquid. An IR spectrum of the product indicated that all the nitro groups had been reduced. This product was used without further purification.

EXAMPLE 8

In a 1000cc three-necked flask equipped with a mechanical stirrer, thermometer, dropping funnel, and water bath were placed 142 gm (0.50 mole) of 1,2,3,-tris-(-3-aminopropoxy) propane, 129.7 (1.46 mole) of 2-nitropropane, and 129 gm of ethyl alcohol. To this mixture, 111.6 gm of 37.3% formaldehyde solution (1.39 mole) were added through the dropping funnel over 30 minutes such that the reaction temperature did not exceed 51°C. A reflux condenser was then attached and the reaction mixture was heated to 79-80°C with a water bath. After 5½ hours of heating at 79-80°C, the reaction was cooled. On cooling, the ethyl alcohol, water, and any unreacted starting materials were then distilled away from the product under vacuum (15.20 mmHg) to give a yellow liquid. An IR spectrum of the product indicated the presence of nitro groups. A potentiometric titration of the product with one normal hydrochloric acid resulted in a neutralization equivalent of 5.51 milliequivalents of HCl per one gram of product. The theoretical value was calculated to be 5.43 milliequivalents of HCl per gram of product which is in good agreement with the observed experimental value. This poly-(-2-nitro-2-methylpropyl)-1,2,3-tris-(-3-aminopropoxy)propane was used without further purification.

EXAMPLE 9

In a 1000cc three-necked flask equipped with a mechanical stirrer, thermometer, dropping funnel, and water bath were placed 741 gm (0.37 mole) of a polyoxypropylene diamine of about 2000 molecular weight (sold by Jefferson Chemical under the tradename of Jeffamine D2000), 65.8 gm (0.74 mole) of 2-nitropropane and 200 gm of ethyl alcohol. To this mixture, 56.6 gm of 37.3% formaldehyde solution (0.74 mole) were added through the dropping funnel over five minutes. A reflux condenser was then attached and the reaction mixture was heated to 80-83°C with a water bath. After 5 hours of heating at 80-83°C, the reaction was cooled. On cooling, the ethyl alcohol and any unreacted starting materials were distilled away from the product under vacuum (15-20 mmHg) to give a yellow liquid. An IR spectrum of the product indicated

the presence of nitro groups. A potentiometric titration of the ... with one normal hydrochloric acid resulted in a neutralization equivalent of 0.86 milliequivalents of HCl per one gram of product. The theoretical value was calculated to be 0.91 milliequivalents of HCl per gram of product which is in good agreement with the observed experiment value.

EXAMPLE 10

In a 1000cc three-necked flask equipped with a mechanical stirrer, thermometer, dropping funnel, and water bath were placed 110 gm (0.50 mole) of bis-(-3-aminopropyl)diethylene glycol, 129.7 (1.46 mole) of 2-nitropropane, and 129 gm of ethyl alcohol. To this mixture, 111.6 gm of 37.3% formaldehyde solution (1.39 mole) were added through the dropping funnel over 30 minutes such that the reaction temperature did not exceed 51°C. A reflux condenser was then attached and the reaction mixture was heated to 79-80°C with a water bath. After 5½ hours of heating at 79-80°C the reaction was cooled. On cooling, the ethyl alcohol, water, and any unreacted starting materials were then distilled away from the product under vacuum (15.20 mmHg) to give a yellow liquid. An IR spectrum of the product indicated the presence of nitro groups. The poly-(-2-nitro-2-methylpropyl)-bis-(-3-aminopropyl)diethylene glycol was used without further purification.

EXAMPLE 11

In a two liter stirred autoclave were charged 606 gm of isopropyl alcohol, 190 gm of poly-(-2-nitro-2-methylpropyl)-1,2,3-tris-(-3-aminopropoxy)propane prepared in Example 8, 12.5 gm of 40% aqueous methylamine and 50 gm of wet Raney nickel No. 28 catalyst. The autoclave was sealed and pressure checked to 2000 psi for leaks. Afterwards the pressure was then adjusted to 1000 psi with hydrogen gas and the autoclave was then heated. On heating, rapid hydrogen up-take was noted with an initial exotherm. After the exotherm ended, the reaction contents were then post-heated at 100-105°C and 1500 psi for an additional 30 minutes. The autoclave was cooled and the contents were emptied. The methylamine, isopropyl alcohol, and water were removed from the product

0074707

under vacuum (15 to 30 mmHg) to give a colorless liquid. This colorless liquid was stripped further under higher vacuum (0.5 to 2.0 mmHg) to remove any other low boiling impurities present. An IR spectrum of the product indicated that all the nitro groups had been reduced. A potentiometric titration of the product with one normal hydrochloric acid resulted in a neutralization equivalent of 11.78 milliequivalents of HCl per one gram of product. The theoretical value was calculated to be 11.12 milliequivalent of HCl per gram of product which is in good agreement with the observed experimental value. The poly-(-2-amino-2-methylpropyl)-1,2,3-tris-(-3-aminopropoxy)propane was used without further purification.

EXAMPLE 12

In a two liter stirred autoclave were charged 500 gm of methyl alcohol, 12.5 gm of 40% aqueous methyl amine, 517.5 gm of the poly-(-2-nitro-2-methylpropyl) polyamine prepared in Example 9, and 30 gm of wet Raney nickel No. 28 catalyst. The autoclave was sealed and pressure checked to 2000 psi for leaks. Afterwards the pressure was then adjusted to 1000 psi with hydrogen gas and the autoclave was then heated. On heating rapid hydrogen up-take was noted with an initial exotherm. After the exotherm ended, the reaction contents were then post-heated at 100-105°C for an additional 60 minutes. The autoclave was cooled and the contents were emptied. The methylamine, methyl alcohol, and water were removed from the product under vacuum (15 to 30 mmHg) to give a colorless liquid. This colorless liquid was stripped further under higher vacuum (0.5 to 2.0 mmHg) to remove any other low boiling impurities present. An IR spectrum of the product indicated that all the nitro groups had been reduced. A potentiometric titration of the product with one normal hydrochloric acid resulted in a neutralization equivalent of 0.94 milliequivalents of HCl per one gram of product. The theoretical value was

calculated to be 0.93 milliequivalents of HCl per gram of product which is in excellent agreement with the observed experimental value. This poly-(-2-nitro-2-methylpropyl)polyamine was used without further purification.

Example 13

In a two litre stirred autoclave were charged 606 gm of isopropyl alcohol, 150 gm of poly(2-nitro-2-methylpropyl)-bis(-3-aminopropyl)diethylene glycol prepared in Example 10, 12.5 gm of 40% aqueous methylamine,and 40 gm of wet Raney nickel No.28 catalyst. The autoclave was sealed and pressure-checked to 2000 psi for leaks. The pressure was then adjusted to 1000 psi with hydrogen gas and the autoclave was then heated. On heating, rapid hydrogen up-take was noted with an initial exotherm. After the exotherm ended, the reaction contents were then post-heated at 100-150°C and 1500 psi for an additional 30 minutes. The autoclave was cooled and the contents were emptied. The methylamine, isopropyl alcohol and water were removed from the product under vacuum (15 to 30 mmHg) to give a colourless liquid. This colourless liquid was stripped further under higher vacuum (0.5 to 2.0 mmHg) to remove any other low boiling impurities present. An IR spectrum of the product indicated that all the nitro groups had been reduced. The poly(2-amino-2-methylpropyl)-bis(3-aminopropyl)diethylene glycol prepared in Example 13 was used without further purification.

EXAMPLE 14

In a 1,000 cc three-necked flask equipped with a magnetic stir bar, thermometer, dropping funnel, reflux condenser with a Dean-Stark collector, and heating mantle 238 gm (2 moles) of 2-nitro-2-methyl-1-propanol and 200 ml of toluene were heated to 40°C until dissolution. 1,2-diaminocyclohexane was added to this solution and the heating continued. Water and toluene began to azeotrope between 90 and 95°C. After 2 hours, the temperature reached 118°C, when 36 ml of water were collected. The reaction mixture was cooled and the toluene was distilled at a reduced pressure. The product was found to contain mainly N,N'-(-2-nitro-2-methylpropyl)-1,2-diaminocyclohexane by GLC. The product amounted to a total overall yield of 302 g, or 95.5% of the N,N'-(-2-nitro-2-methylpropyl)-1,2-diaminocyclohexane.

The crude product was purified by filtration with hexanes to give yellowish white crystals (mpt=83-84°C). The IR, proton NMR, and GC-mass spectra were consistent with the dinitroamine as well as the elemental analysis.

Calc. for $C_{14}H_{28}N_4O_4$: C, 53.16%; H, 8.86%; N, 17.72%.
Found: C, 53.02%; H, 8.76%; N, 18.09%.

EXAMPLE 15

In a 1,000 cc three-necked flask equipped with a magnetic stir bar, thermometer, reflux condenser with a Dean-Stark collector, and heating mantle were placed 114 g (1 mole) crude 1,2-diaminocyclohexane, 200 ml toluene, and 178 g (2 moles) 2-nitropropane. 60 g (2 moles) of paraformaldehyde were added to this mixture in 1½ hours. The mixture was heated for 2 hours, when 36 ml of water were recovered from the Dean-Stark collector. After cooling, the toluene was distilled at a reduced pressure. The crude product amounted to an overall yield of 310 g, or 89% of N,N'-(-2-nitro-2-methylpropyl)-1,2-diaminohexane. An IR spectrum indicated that nitro groups were present. The product was used without further purification.

Example 16

In a 1,000 cc three-necked flask equipped with a magnetic stir bar, thermometer, Dean-Stark trap collector, and heating mantle were placed 119 gm (1 mole) of 2-nitro-2-methyl-1-propanol, 150 cc of toluene, 10 cc of 2-nitropropane, and 61.1 gm (0.5 mole) of o-toluenediamine. This mixture was then heated to reflux and water-distilled over into the Dean-Stark trap. After 8 hours of reflux, no further water was collected. On cooling, the toluene and unreacted starting materials were then distilled away from the product under vacuum (15-20 mm Hg) to give a viscous brown product. An IR spectrum of the poly(2-nitro-2-methylpropyl)-ortho-toluenediamines indicated the presence of nitro groups. The crude product was used without further purification.

Example 17

In a 1,000 cc three-necked flask equipped with a mechanical stirrer, thermometer, Dean-Stark trap collector, and heating mantle were charged 119 gm (1 mole) of 2-nitro-2-methyl-1-propanol, 150 cc of toluene, 10 cc of 2-nitropropane, and 100 gm (0.33 mole) of 2,4-bis(p-aminobenzyl)-aniline. This mixture was then heated to reflux and water-distilled over into the Dean-Stark trap. After 10 hours of reflux, no further water was collected. On cooling, the toluene and unreacted starting materials were then distilled away from the product under vacuum (15-20 mm Hg) to give an extremely viscous liquid. An IR spectrum of the product indicated the presence of nitro groups. The poly(2-nitro-2-methylpropyl)-2,4-bis(p-aminobenzyl)aniline was used without further purification.

Example 18

In a 1,000 cc rocking autoclave were charged 155.5 gm of crude N,N'-(2-nitro-2-methylpropyl)-1,2-diaminocyclohexane, 300 ml of methyl alcohol, and 6.2 gm of Raney nickel. The autoclave was sealed and pressured with hydrogen gas. The reduction of the dinitroamine was conducted at 1,000-1,500 psi hydrogen pressure and 20-65°C until hydrogen absorption was complete. On cooling, the

reaction mixture was filtered from the catalyst and the methyl alcohol was removed by evaporation. The crude product was then distilled under high vacuum (bpt.=133-134°C at 0.8 mm Hg) to give 80.50 gm or 64% yield of the faintly yellow tetramine, N,N'-(2-amino-2-methylpropyl)-1,2-diaminocyclohexane. The IR, proton NMR and GC-mass spectra were consistent with the tetramine, as was the elemental analysis. Calc. % N, 21.8; Found % N, 20.4

Example 19

In a 1,000 cc rocking autoclave were charged 300 gm (0.95 mole) of crude N,N'-(2-nitro-2-methylpropyl)-1,2-diaminocyclohexane, 400 ml of methyl alcohol, and 12.8 gm of Raney nickel catalyst. The autoclave was sealed and pressured with hydrogen gas. The reduction of the dinitroamine was conducted at 800-1,600 psi hydrogen pressure and 20-90°C until hydrogen absorption was complete. On cooling, the reaction mixture was filtered from the catalyst and the methyl alcohol was removed by evaporation. The crude product was then distilled under high vacuum (bpt.=133-134°C at 0.8 mm Hg) to give 74% yield of the faintly yellow tetramine, N,N'-(2-amino-2-methylpropyl)-1,2-diaminocyclohexane. An IR spectrum indicated that no nitro groups were present.

Example 20

In a 2,000 cc stirred autoclave were charged 300 gm of crude poly-(2-nitro-2-methylpropyl)polyamine of Example 16, 330 cc of methyl alcohol, and 7.1 gm of Raney nickel catalyst. The autoclave was sealed and pressured with hydrogen gas. The reduction of the poly-(2-nitro-2-methylpropyl)polyamine was conducted at 1,000-1,600 psi hydrogen pressure and 40-115°C until hydrogen absorption was complete. On cooling, the reaction mixture was filtered from the catalyst and the methyl alcohol and any volatiles were removed under vacuum to give a dark-yellow-coloured product. An IR spectrum of the product indicated that all the nitro groups had been reduced. This product was further distilled to give a yellow-coloured liquid.

TEST EXAMPLE 1

In this Example, the glass transition temperature was measured for a cured epoxy resin of the formula

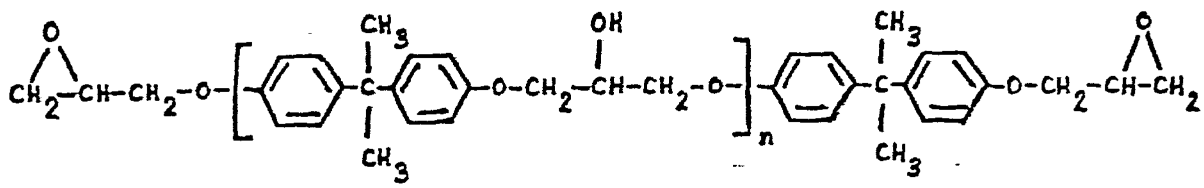

which is based on the diglycidyl ether of bisphenol A (n=0.2, WPE=185-195). The curing agents used were 4-aminomethyl-1,8-octanediamine (I), 1,2,3-tris(3-aminopropoxy)propane (II), and, to illustrate the invention, the products of Examples 5, 6, 11, 18 and 20 (E5, E6, E11, E18 and E20, respectively). The fractionated E5 product contained 20% mono-, 60% di- and 20% tri-2-amino-2-methylpropyl substitution (by GLC). The corresponding figures for the E6 fractionated product were 10, 24 and 66%.

The epoxy resin was reacted, in each experiment, in a beaker, with a certain amount (tabulated below), per 100 parts of the resin, of the curing agent. After thorough mixing for 2 minutes, the mixture was centrifuged at 3000 rpm, placed in an aluminium mould and cured for 2 hours at 80°C. A further curing period, of 2 hours at 150°C, was used in certain cases. Maximum glass transition temperatures (Tg) were measured for the cross-linked products, using a differential scanning calorimeter (Perkin Elmer Model DSC-2), and the results are tabulated below.

| Amine | Amount of Amine (parts) | Further curing period | Tg (°C) |
|---|---|---|---|
| I | 14 | Yes | 138.6 |
| I | 15 | Yes | 145.1 |
| I | 16 | Yes | 140.1 |
| I | 17 | Yes | 128.1 |
| I | 17 | No | 145.1 |

| | | | |
|---|---|---|---|
| E5 | 21 | No | 151.3 |
| E6 | 23 | No | 156.6 |
| II | 22.9 | Yes | 100.4 |
| II | 23.4 | Yes | 105.4 |
| II | 23.9 | Yes | 106.4 |
| II | 24.4 | Yes | 104.9 |
| E11 | 25.3 | No | 117.4 |
| E11 | 26.3 | No | 123.4 |
| E11 | 27.3 | No | 129.9 |
| E11 | 28.3 | No | 127.4 |
| E11 | 29.3 | No | 125.1 |
| E18 | 22.8 | Yes | 135.0 |
| E18 | 24.2 | Yes | 136.5 |
| E18 | 27.5 | Yes | 153.5 |
| E18 | 29.0 | Yes | 157.5 |
| E18 | 30.5 | Yes | 155.0 |
| E18 | 32.0 | Yes | 149.0 |
| E18 | 35.5 | Yes | 137.0 |
| E20 | 22.5 | Yes | 121.0 |
| E20 | 24.4 | Yes | 116.5 |
| E20 | 26.0 | Yes | 115.0 |
| E20 | 29.0 | Yes | 111.0 |
| E20 | 32.0 | Yes | 106.0 |

Direct comparison shows that Tg is higher for the products of the invention than for directly comparable known amines.

TEST EXAMPLE 2

To 100 parts of the epoxy resin used in Test Example 1 in each of two beakers, 17.0 parts of 1,2-diaminocyclohexane and 260 parts of E18 were added, respectively. After thorough mixing for 2 minutes at 25$^{o}$C, the gelation time for each mixture was observed, using a TeCam Gel Mixer. The respective times were 126.8 and 359 minutes, demonstrating extended pot-life for the novel products.

CLAIMS

1. A polyamine of the formula

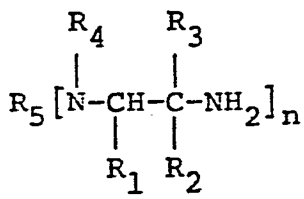

wherein $R_1$ is H or $C_{1-12}$ alkyl;

$R_2$ and $R_3$ are independently selected from H and $C_{1-8}$ alkyl;

$R_4$ is H or

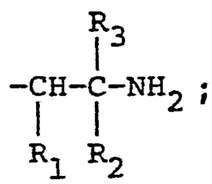

$R_5$ is a radical having a valency of n and which is the radical of a $C_{5-30}$ alkane, a $C_{12-30}$ aromatic compound or $C_{5-60}$ cycloalkane or is derived from an amine-terminated polygycol having a molecular weight of from 100 to 6,000 and from 2 to 100 ether linkages; and

n is an integer of from 2 to 15.

2. A polyamine as claimed in claim 1, wherein $R_2$ and $R_3$ are each $CH_3$.

3. A polyamine as claimed in claim 1 or claim 2, wherein $R_1$ is H.

4. A polyamine as claimed in any preceding claim, wherein $R_4$ is H.

5. A polyamine as claimed in any preceding claim, wherein $R_5$ is derived from an amine-terminated polygycol as defined in claim 1.

6. A polyamine as claimed in claim 5, wherein the polyglycol is any of the following formulae

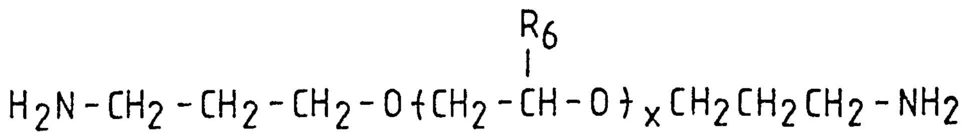

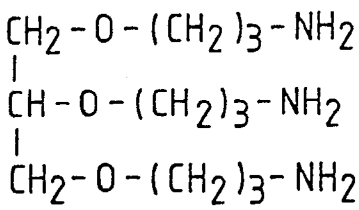

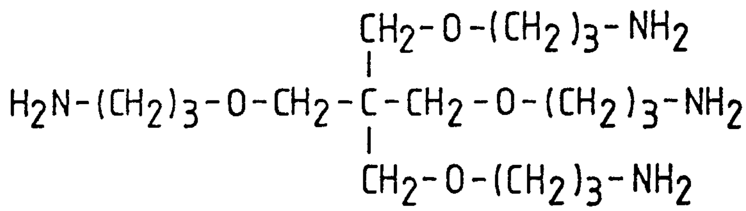

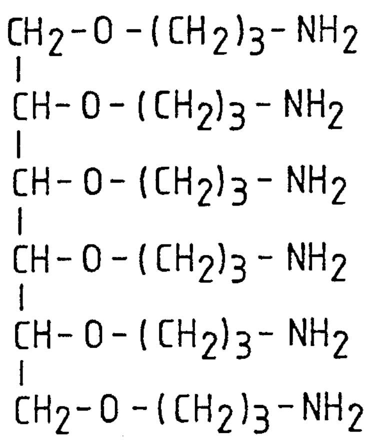

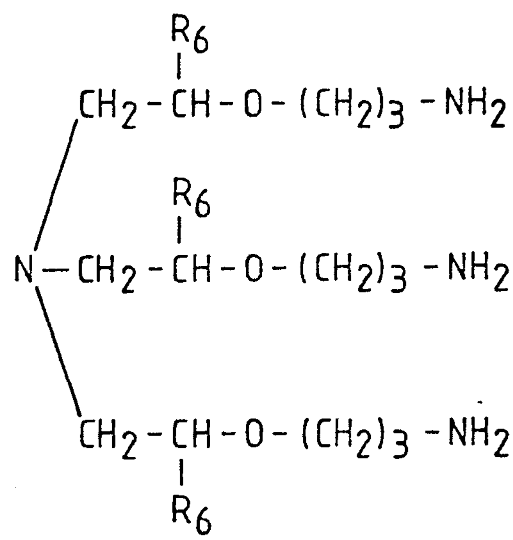

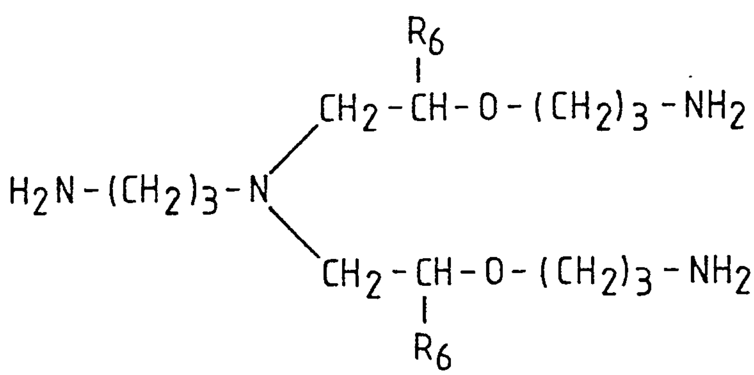

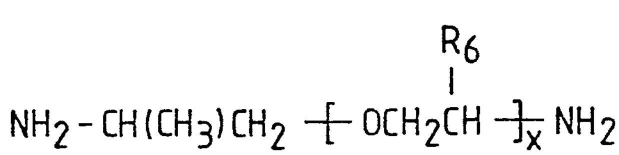

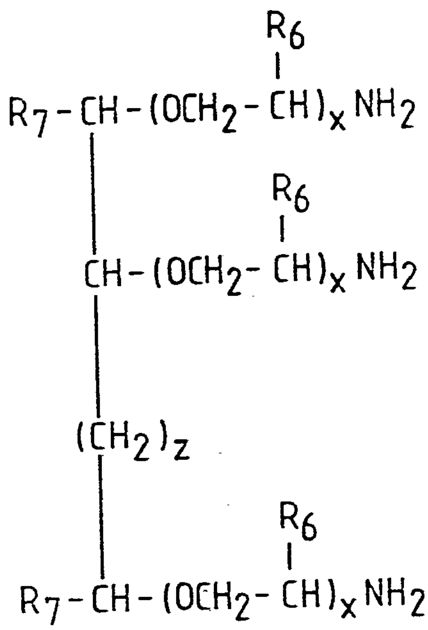

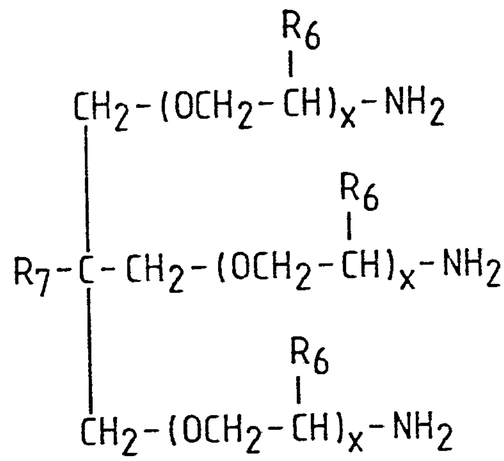

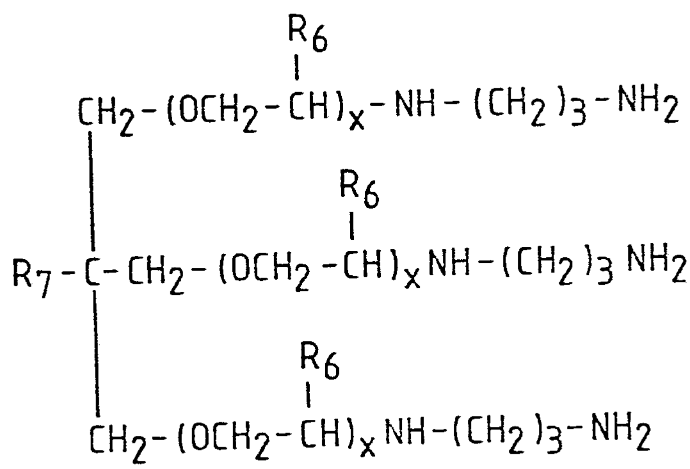

in which $\underline{x}$ is an integer of from 1 to 100; $\underline{z}$ is zero or an integer of from 1 to 10; $R_6$ is H or $CH_3$; and $R_7$ is H or $C_{1-8}$ alkyl.

7. A polyamine as claimed in claim 5, wherein the polyglycol has the formula

$$\begin{array}{l} \qquad\qquad\qquad\qquad\quad [BXBR[BX]_g BR[ANH_2]_f]_h \\ \qquad\qquad\qquad\qquad\quad\ \ | \\ [H_2NA]_c R[BX]_d [BRBX]_y BR[ANH_2]_e \end{array}$$

wherein A is a poly($C_{2-5}$ oxyalkylene) radical containing from 1 to 20 oxyalkylene groups; B is a poly($C_{2-5}$ oxyalkylene)amino radical containing from 1 to 20 oxyalkylene; R is $C_{2-5}$ hydrocarbon radical forming from 2 to 4 oxycarbon linkages with A and B; X is a C=O or C=S radical or a radical derived from a difunctional isocyanate having two -NH-CO- groups; $\underline{c}$, $\underline{d}$, $\underline{e}$, $\underline{f}$ and $\underline{g}$ are each 1, 2, 3, provided that $\underline{c} + \underline{d} \leqslant 4$; y is 0 or an integer of 1 to 6; and $\underline{h}$ is 0, 1 or 2.

8. A polyamine as claimed in any of claims 1 to 4, wherein $R_5$ is the radical of an aromatic compound or a cycloalkane.

9. A polyamine as claimed in claim 8, wherein $R_5$ is derived from a polyamine of the formula $R_5(NH_2)_n$ having any of the formulae

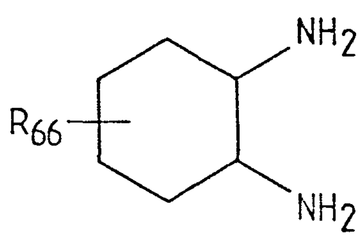

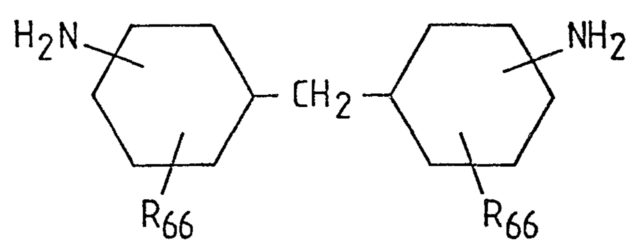

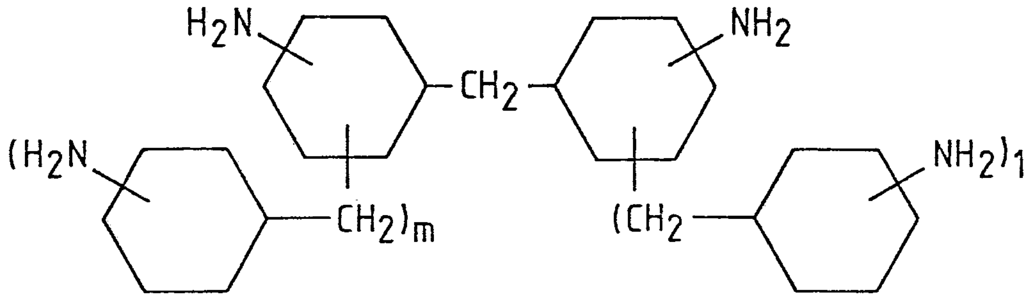

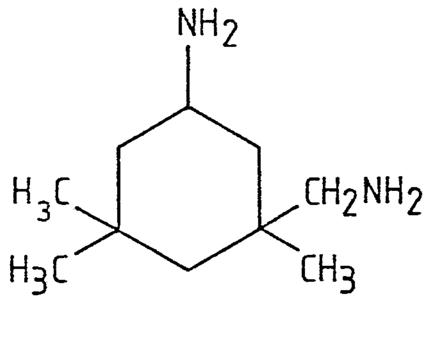

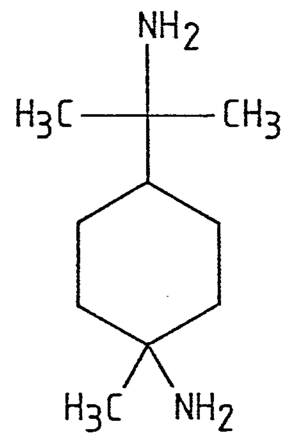

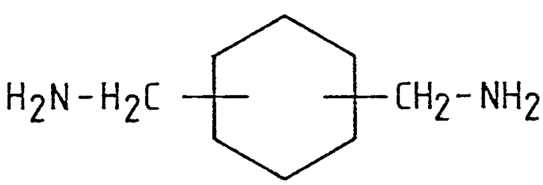

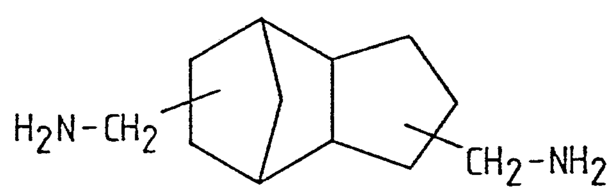

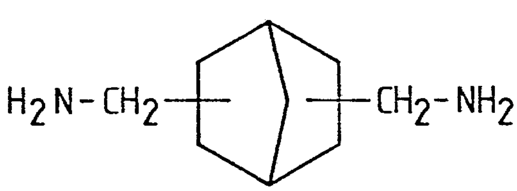

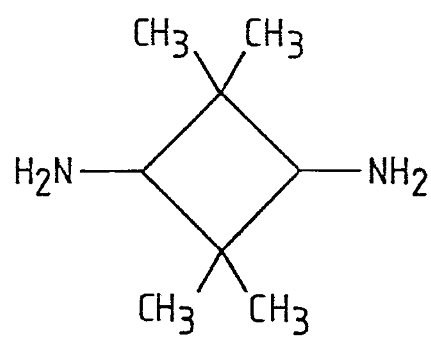

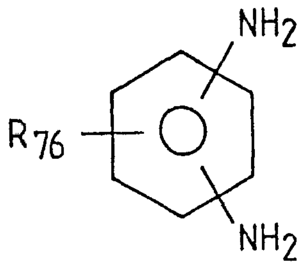

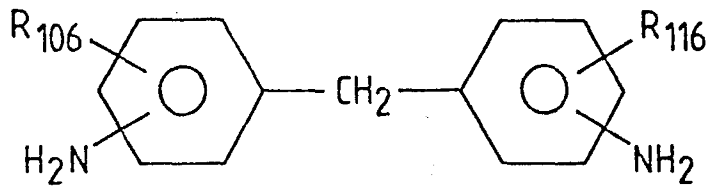

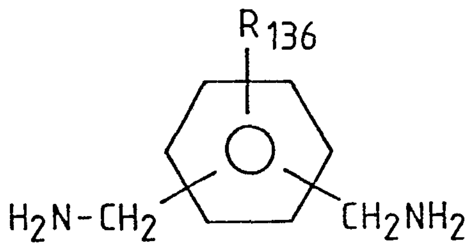

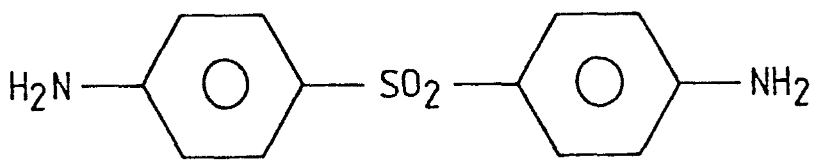

; and

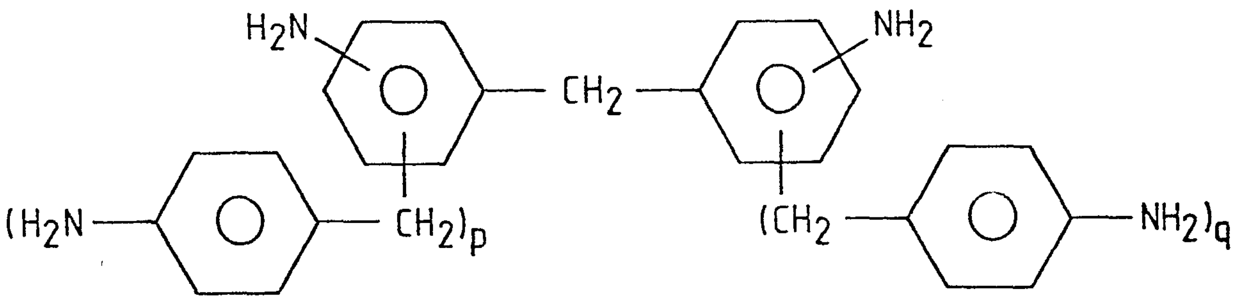

wherein $R_{66}$ is H or $C_{1-5}$ alkyl; $\underline{l} + \underline{m}$ is from 0 to 4; $R_{76}$ is selected from H, $C_{1-6}$ alkyl, $C_{1-24}$ alkoxy, Cl, Br, $NO_2$ or $SO_2R_{86}$ where $R_{86}$ is $C_{1-24}$ alkyl or $C_{6-24}$ aryl; $R_{106}$ and $R_{116}$ are independently selected from H, $C_{1-6}$ alkyl, $C_{1-24}$ alkoxy, Cl and Br; $R_{136}$ is H or $C_{1-6}$ alkyl; and $\underline{p} + \underline{q}$ is from 0 to 4.

10. A polyamine as claimed in any claims 1 to 4, wherein $\underline{n}$ is from 3 to 12 and $R_5$ is derived from an alkane.

11. A polyamine as claimed in claim 10, wherein $R_5$ is derived from an amine of the formula

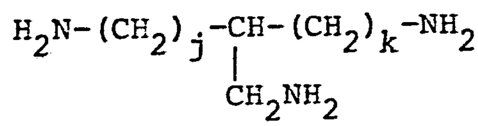

wherein j and k are the same or different integers of from 1 to 7.

12. An epoxy resin composition comprising an epoxy resin and a polyamine as claimed in any preceding claim.

13. A polyamine of the formula

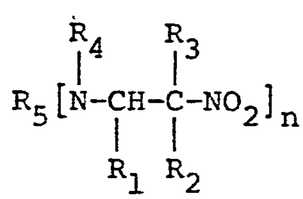

wherein $R_1$, $R_2$, $R_3$, $R_4$, $R_5$ and $\underline{n}$ are as defined in any of claims 1 to 11.